# EUROPÄISCHE PATENTANMELDUNG

(11) **EP 2 383 548 A1**
(43) Veröffentlichungstag der Anmeldung: **02.11.2011**
(21) Anmeldenummer: 10161420.4
(22) Anmeldetag: 29.04.2010
(51) Int. Cl.: G01F 1/58, G01F 1/60

(54) **Messvorrichtung und Verfahren zur Messung der Fließgeschwindigkeit eines ein Messrohr durchfließenden Mediums**

(71) Anmelder: Zylum Beteiligungsgesellschaft mbH & Co. Patente II KG, 12529 Schönefeld / Waltersdorf (DE)
(72) Erfinder: Stange, Gerd, Prof. Dr., 24589, Nortorf (DE)
(74) Vertreter: Zech, Stefan Markus

(57) **Zusammenfassung**

Es wird eine Messvorrichtung (1) zur Messung der Fließgeschwindigkeit eines ein Messrohr (3) durchfließenden Mediums (5) vorgeschlagen. Die Messvorrichtung (1) weist Mittel zur Erzeugung eines orthogonal zu der Fließrichtung (v) des Mediums (5) liegenden gleichbleibenden magnetischen Feldes (B) auf, sowie wenigstens zwei Auskopplungsbereiche (7, 7'), die in einer orthogonal zu der Fließrichtung (v) des Mediums (5) liegenden Ebene (E) an der Wandung (9) des Messrohrs (3) angeordnet sind, wobei ein Auskopplungsbereich (7, 7') jeweils eine Elektrode (13, 13') aufweist, die auf der dem Medium (5) zugewandten Seite eine nichtmetallische poröse Schicht (11) aufweist, und eine Messeinrichtung (19) zur Erfassung eines Messsignals. Die Messvorrichtung (1) zeichnet sich dadurch aus, dass die poröse Schicht (11, 11') einen oxidischen und/oder einen nichtoxidischen keramischen Werkstoff aufweist.

## Beschreibung

Die Erfindung betrifft eine Messvorrichtung zur Messung der Fließgeschwindigkeit eines ein Messrohr durchfließenden Mediums gemäß dem Oberbegriff des Anspruchs 1 sowie ein Verfahren zur Messung der Fließgeschwindigkeit eines ein Messrohr durchfließenden Mediums gemäß dem Oberbegriff des Anspruchs 15.

Vorrichtungen zur magnetisch-induktiven Messung der Fließgeschwindigkeit eines Mediums sind beispielsweise aus WO 2008/107460 A1, WO 03/098164 A1 und WO 2007/031053 A2 bekannt. Sie weisen üblicherweise Mittel zur Erzeugung eines orthogonal zu der Fließrichtung des Mediums liegenden magnetischen Feldes auf sowie Elektroden, die in einer orthogonal zur der Fließrichtung des Mediums liegenden Ebene an der Wandung eines Messrohrs angeordnet sind und über die eine sich in dem Medium aufbauende elektrische Spannung erfasst wird. Das mittels der Elektrode erfasste Messsignal wird dann einer Messeinrichtung zugeführt, in der das Messsignal ausgewertet wird.

Magnetisch-induktive Durchflusssensoren (MID) machen sich die Tatsache zunutze, dass durch ein in einem Messrohr fließendes Medium, welches von einem Magnetfeld durchsetzt wird, ein elektrisches Feld induziert wird, welches über die Elektroden in Form einer Spannung gemessen werden kann. Diese ist direkt proportional zu der Fließgeschwindigkeit des Mediums. Auf Basis der Fließgeschwindigkeit kann dann die Durchflussmenge des Mediums errechnet werden. Für die Signalauskopplung derartiger Messvorrichtungen kann ein galvanischer oder ein kapazitiver Signalabgriff zum Einsatz kommen. Meist wird die galvanische Signalauskopplung verwendet, bei der mit Durchführungen durch die Rohrinnenwand versehene metallische Elektroden geringen Durchmessers (im Allgemeinen wenige Millimeter) direkt mit dem Medium in (galvanischem) Kontakt stehen. Sie müssen mit zuverlässigen Abdichtungen gegenüber der Rohrwand versehen sein. Diese Art der Auskopplung zeichnet sich durch robusten und einfachen Aufbau aus, ist jedoch anfällig gegenüber chemischem Angriff, Ablagerungen und Abrasion an den Elektroden und den Abdichtungen. Die Beherrschung hoher Betriebstemperaturen setzt eine sorgfältige Abstimmung hinsichtlich der thermischen Ausdehnungskoeffizienten des Elektrodenmaterials und des Wandmaterials voraus.

Bei der kapazitiven Signalauskopplung steht die Elektrode nicht in direktem Kontakt mit dem Medium, sondern ist mit einer isolierenden Schicht umgeben, die wiederum mit dem Medium in Kontakt steht.

Marktübliche magnetisch-induktive Durchflusssensoren arbeiten mit zeitlich veränderlichen Magnetfeldern, sogenannten Wechselfeldern, um dem Nutzsignal überlagerten Störsignale, die nach schnell veränderlichen Rausch- und langsam veränderlichen Driftanteilen unterschieden werden, zu eliminieren. Die wesentlichen Quellen dieser Störsignale sind zeitlich veränderliche, nicht exakt determinierbare Doppelschichtpotenziale an der Grenze zwischen dem Fließmedium und Koppelelement, d. h. insbesondere der Elektrode. Zur Berücksichtigung dieser Signalanteile sind stromdurchflossene Feldspulen erforderlich, die meist pulsförmig, also getaktet betrieben werden. Sowohl bei der galvanischen, als auch bei der kapazitiven Auskopplung der Messsignale ist ein zeitlich veränderliches Magnetfeld bekannter Größe erforderlich, was einen zusätzlichen Energieaufwand zur Erzeugung dieser magnetischen Felder zur Folge hat. Derartige Messvorrichtungen mit Wechselfeldern erlauben auch nur eine diskontinuierliche Messung mit der Pulsfolgefrequenz des Magnetfelds. Die erforderliche Pulsfolgefrequenz des Magnetfelds hängt darüber hinaus vom Frequenzspektrum der Störspannungen ab. Daher gibt es Bestrebungen, Messvorrichtungen zu entwickeln, die keine zeitlich veränderlichen magnetischen Felder erfordern, sondern die mit einem Permanentmagneten auskommen und die dennoch die Unterdrückung von Störsignalen ermöglichen.

Wegen ihres erheblichen Einflusses auf die Messgenauigkeit sind Ansätze bekannt Systeme und Komponenten zur Signalauskopplung bei magnetisch-induktiven Durchflusssensoren zu schaffen, die hinsichtlich ihres Rausch- und Driftverhaltens erheblich günstigere Eigenschaften haben als herkömmliche Messvorrichtungen mit rein metallischen Elektroden einer galvanischen Signalauskopplungsstruktur. Beispiele hierfür werden in US 4,517,846 und WO 98/55837 A1 beschrieben. In beiden Fällen werden Beschichtungen einer metallischen Elektrode mit sehr harten Metalloxiden dergestalt vorgeschlagen, dass das Fließmedium nur mit dieser Schicht in direkten Kontakt tritt. Diese ist ihrerseits zwar elektrisch isolierend, jedoch porös ausgebildet. Diese poröse Struktur kann bereits durch den Herstellungsprozess der Schicht oder aber durch gezielte nachträgliche Bearbeitung erzeugt werden.

Eine derartige poröse Schicht weist den Vorteil einer rausch- und driftmindernden Wirkung auf, die mit dem Eindringen des Mediums in die Porenstruktur erklärt wird. Durch die Porenstruktur wird eine vergrößerte Kontaktfläche zwischen dem in dem Messrohr fließenden Medium und dem Festkörper, also der Signalauskopplungsstruktur geschaffen. Weiterhin bilden sich Ionenkanäle in den Poren aus, die für die Leitfähigkeit der an sich isolierenden Schicht sorgen. Darüber hinaus wird der Schicht die Fähigkeit zur Ionenspeicherung zugeschrieben, die als Ladungspuffer dient und daher eine rausch- und driftreduzierende Wirkung hat.

Im jüngeren Schrifttum wird auch über fraktale Oberflächenstrukturen von Schichten, beispielsweise aus Titannitrid berichtet, die mit großem Erfolg in der Medizintechnik als rausch- und driftarme Schichten zur Signalein- und Signalauskopplung - z. B. bei Herzschrittmachern - eingesetzt werden (vgl. Wintermantel, E., "Medizintechnik", Springer, Berlin, 5. Auflage 2009, S.1338 ff.). Es ist zu erwarten, dass ähnliche Lösungen auch für die Signalauskopplung aus dem magnetisch-induktiven Durchflusssensor geeignet sind und dort zu einer weiteren Herabsetzung der elektrochemisch verursachten Rausch-, Drift- und Sprungsignale führen.

Wünschenswert ist es weiterhin einen magnetisch induktiven Durchflusssensor zu schaffen, der nicht auf einen Stromfluss im Medium angewiesen ist. Die stromlose Messung hat entscheidende Vorteile, insbesondere werden einmal eingestellte Ladungsgleichgewichte durch die Messung nicht gestört, da sie mit keinerlei Stofftransporten verbunden ist. Dies wirkt sich vorteilhaft im Sinne einer weiteren Reduzierung der Drift aus. Während die meisten Verfahren zur Signalauskopplung beim magnetisch induktiven Durchflusssensor einen Stromfluss voraussetzen, ist aus der DE 10 2005 043 718 B3 ein stromloser Ansatz bekannt. Dort wird eine reine Feldmessung eines elektrischen Feldes vorgeschlagen, welches durch die Wechselwirkung des in dem Messrohr strömenden Mediums mit dem Magnetfeld entsteht. Dabei wirkt sich das elektrische Feld steuernd auf den Widerstand eines benachbarten Halbleiters aus. In einer konkreten Ausprägung übernimmt dort ein Paar von ISFETs (ionensensitiver Feldeffekttransistor) die Signalauskopplung, indem die mit einer isolierenden Schicht versehenen Gateelektroden der Transistoren jeweils mit dem Fließmedium in Kontakt stehen. Im einfachsten Fall besteht die isolierende Schicht auf der Gateeletrode aus Siliziumdioxid. Von diesem Material ist es bekannt, dass an seiner Oberfläche H⁺-Ionen ein- und ausgelagert werden können (P. Bergveld, ISFET, Theory and Practice, IEEE SENSOR CONFERENCE TORONTO, October 2003). Dadurch stellen sich ein vom pH-Wert des Fließmediums abhängiges Gleichgewicht der Oberflächenladung und eine durch diese Oberflächenladung verursachte Doppelschichtspannung ein. Die Oberfläche des Isolierstoffs wirkt wie ein Ladungsspeicher, der aufgrund seiner Pufferwirkung die Doppelschichtspannung stabilisiert und auf diese Weise wirksam zur Rauschunterdrückung beiträgt. Zwischen den Gates des ISFET-Paares wird die Netzspannung - überlagert von der Differenz der Doppelschichtspannung - gemessen, indem die ISFET-Bahnwiderstände durch sie gesteuert werden.

Wie gesagt hat die stromlose Messung insbesondere den entscheidenden Vorteil, dass einmal eingestellte Ladungsgleichgewichte durch die Messung nicht gestört werden, da die Messung mit keinerlei Stofftransport verbunden ist. In der Praxis hat jedoch jeder Isolierstoff eine sehr geringe, aber endliche Leitfähigkeit, so dass eine stromlose Messung in Wahrheit nur näherungsweise möglich ist. Das beschriebene ISFET-System zur Signalauskopplung kann daher auch als Kombination eines Paares von Ionenspeicherschichten und eines Differenzverstärkers mit einem extrem hohen Eingangswiderstand verstanden werden.

Die oben beschriebenen, aus dem Stand der Technik bekannten Messvorrichtungen zur magnetisch induktiven Messung weisen den Nachteil auf, dass eine getrennte Optimierung der Messvorrichtung in Bezug auf die Minimierung von Rausch- und Störsignalen sowie die Realisierung einer nahezu stromlosen Messung nicht möglich ist.

Es ist daher die Aufgabe der vorliegenden Erfindung, eine Messvorrichtung und ein Verfahren zur Messung der Fließgeschwindigkeit eines ein Messrohr durchfließenden Mediums zu schaffen, welche die Vorteile der fast stromlosen Feldmessung mit den Vorteilen der Signalauskopplung über nichtmetallische Schichten verbindet und die mit Permanentmagneten betrieben werden kann.

Zur Lösung dieser Aufgabe wird eine Messvorrichtung mit den kennzeichnenden Merkmalen des Patentanspruchs 1 vorgeschlagen. Vorteilhafte Ausgestaltungen der Messvorrichtung sind in den Unteransprüchen aufgeführt.

Gemäß der Erfindung sind zur Messung der Fließgeschwindigkeit eines ein Messrohr durchfließenden Mediums Mittel zur Erzeugung eines orthogonal zu der Fließrichtung des Mediums liegenden gleichbleibenden magnetischen Feldes vorgesehen. Weiterhin weist eine Messvorrichtung gemäß der Erfindung wenigstens zwei sich vorzugsweise gegenüberliegende Auskopplungsbereiche auf, die in einer orthogonal zu der Fließrichtung des Mediums liegenden Ebene an der Wandung des Messrohrs angeordnet sind, wobei ein Auskopplungsbereich jeweils eine Elektrode aufweist, die auf der dem Medium zugewandten Seite eine poröse Schicht aufweist. Die poröse Schicht kann eine Porenstruktur oder eine fraktale Struktur aufweisen und weist vorzugsweise eine nichtmetallische harte mechanische Beschaffenheit auf. Vorzugsweise bedeckt sie die dem Medium zugewandte Seite der Elektrode vollständig und isoliert auf diese Weise die Elektrode elektrisch gegenüber dem Medium. Die poröse Schicht kann aus einem Metalloxid, einem Metallnitrid oder aus einem Metallcarbid bestehen. Denkbar ist es jedoch auch sie aus Kunststoff auszubilden. Die Dicke der porösen Schicht entspricht vorzugsweise im Wesentlichen der Wanddicke des Messrohrs. Weiterhin wird die poröse Schicht vorzugsweise in situ auf die Elektroden aufgebracht. Schließlich ist noch eine Messeinrichtung zur Erfassung eines Messsignals vorgesehen, bei der es sich um einen Verstärker, insbesondere um einen Differenzverstärker handeln kann oder die einen solchen aufweisen kann. Bei dem Mittel zur Erzeugung eines orthogonal zu der Fließrichtung des Mediums gleichbleibenden magnetischen Feldes handelt es sich vorzugsweise um einen Permanentmagneten, um eine kontinuierliche Messung zu ermöglichen. Die Auskopplungsbereiche bilden einen der Auskopplung des Messsignals dienenden Messpfad, der an der Grenze zu dem in dem Messrohr vorhandenen Medium über die nichtmetallische poröse Schicht führt, die auf ihrer dem Medium zugewandten Seite in direktem Kontakt mit dem fließenden Medium steht und an ihrer Rückseite fest mit einem leitenden Trägermaterial, nämlich mit der Elektrode verbunden ist, die zugleich der Ableitung des Messsignals nach außen dient. Schließlich wird das Messsignal einer Mess- und Auswerteinrichtung zugeführt. Die Erfindung zeichnet sich dadurch aus, dass die poröse Schicht (11, 11') einen oxidischen und/oder einen nichtoxidischen keramischen Werkstoff aufweist.

Darüber hinaus sieht eine spezielle Weiterbildung der Erfindung vor, dass die Messeinrichtung einen Eingangswiderstand von wenigstens 100 GigaOhm (GΩ) aufweist. Vorzugsweise ist der Messpfad derart aufgebaut, dass die mit der nichtmetallischen Schicht bedeckten metallischen Elektroden eines Auskopplungsbereichs so in das in dem Messrohr fließende Medium eintauchen, dass nur die nichtmetallische Schicht in direktem Kontakt mit dem Medium steht und die metallischen Anschlüsse, d.h. die Elektroden direkt mit einer Messeinrichtung, insbesondere mit einem Instrumentenverstärker verbunden sind, der einen Eingangswiderstand von mindestens 100 GΩ aufweist.

Zur Lösung der oben genannten Aufgabe wird auch ein Verfahren zur Messung der Fließgeschwindigkeit eines ein Messrohr durchfließenden Mediums mit den kennzeichnenden Merkmalen des Anspruchs 15 vorgeschlagen, bei dem das Medium von einem orthogonal zur seiner Fließrichtung liegenden, gleichbleibenden magnetischen Feld durchdrungen wird. Die sich in dem Medium aufbauende elektrische Spannung wird mittels Elektroden erfasst, die in einer orthogonal zu der Fließrichtung des Mediums liegenden Ebene an der Wandung des Messrohrs angeordnet sind. Die Elektroden sind mit einer nichtmetallischen porösen Schicht bedeckt. Das Verfahren gemäß der Erfindung zeichnet sich dadurch aus, dass das Messsignal einer Messeinrichtung, insbesondere einem Differenzverstärker zugeführt wird, wobei die Messeinrichtung einen Eingangswiderstand von wenigstens 100 GΩ aufweist. Dadurch ergeben sich die oben ausgeführten Vorteile der zugehörigen Messvorrichtung.

Durch die vorliegende Erfindung lassen sich somit die oben beschriebenen Vorteile der Signalauskopplung über Schichten, wie sie beispielsweise in der US 4,517,846 und der WO 98/55837 A1 vorgeschlagen werden, mit den Vorteilen der fast stromlosen Messung kombinieren, indem die über nichtmetallische poröse Schichten ausgekoppelten Signale einer externen, extrem hochohmigen Messeinrichtung, insbesondere einem Differenzverstärker zugeführt werden. Im Gegensatz zu der in der DE 10 2005 043 718 B3 vorgeschlagenen Signalauskopplung über ISFETs ist bei der vorliegenden Erfindung eine getrennte Optimierung der Schichten einerseits und des Differenzverstärkers andererseits im Hinblick auf die Minimierung der Rausch- und Störsignale möglich. Die moderne Verstärkerentwicklung, verbunden mit den Fortschritten auf dem Gebiet moderner keramischer Werkstoffe und besonders auf dem Gebiet dünner Schichten, d. h. Schichten im Bereich von Mikrometern bis herab zu Nanometern Dicke, schaffen somit gemäß der Erfindung die Voraussetzungen für eine extrem rausch- und driftarme Signalauskopplung.

Die erfindungsgemäße Vorrichtung wurde mit porösen Schichten aus den oxidischen Keramiken Siliziumoxid, insbesondere SiO₂, Aluminiumoxid, insbesondere Al₂O₃ und Titanoxid, insbesondere TiO₂ erfolgreich erprobt. Dazu wurden Schichten unterschiedlicher Schichtdicke, insbesondere von einigen 10 Mikrometern bis zu wenigen Nanometern mit unterschiedlichen Herstellungsverfahren auf die dem Medium zugewandte Seite der Elektroden aufgebracht. So wurden beispielsweise dickere SiO₂-Schichten in Schleiftechnik hergestellt, während die dünnsten Schichten mittels der in der Halbleitertechnologie üblichen Verfahren, wie beispielsweise durch Plasmaabscheidung oder durch Sputtern erzeugt wurden. Extrem dünne TiO₂-Schichten von weniger als 1 Nanometer Dicke wurden durch mehrstündiges Kochen hergestellt.

Darüber hinaus wurde festgestellt, dass auch nichtoxidische keramische Werkstoffe, wie zum Beispiel Siliziumnitrid, insbesondere Si₃N₄, und Siliziumcarbid, insbesondere SiC, ähnlich hervorragende Eigenschaften für die vorgesehene Anwendung bei magnetisch-induktiven Durchflusssensoren haben. Es wird ein wichtiges Ziel weiterer Untersuchungen sein, die Liste der in Frage kommenden Werkstoffe zu vervollständigen.

In allen beschriebenen Fällen wurde ein Instrumentenverstärker mit einem Eingangswiderstand von 120 GΩ eingesetzt. Die verwendeten Permanentmagnete auf der Basis der Seltenen Erden SmCo und NdFe ermöglichen magnetische Flussdichten von bis zu B = 0,5 T im Medium und führen zu einem typischen Nutzsignal von fast 10 mV bei einer Fließgeschwindigkeit des Mediums von 1 m/s. Das magnetische Feld liegt damit um ca. zwei Größenordnungen über demjenigen marktüblicher Geräte. Aufgrund der sehr geringen im Messkreis fließenden Ströme von der Größenordnung Femtoampere lassen sich mit den genannten Beschichtungen weitgehend rausch- und driftfreie Signale gewinnen, die erstmals die Realisierung einer kontinuierlichen Messung der Fließgeschwindigkeiten mit einem permanentmagnetisch betriebenen MID erlauben.

Es ist besonders hervorzuheben, dass sich die extrem hohen magnetischen Flussdichten moderner permanentmagnetischer Materialien auf elektromagnetischem Weg nur mit direkt wassergekühlten Leitern erzeugen lassen. Da das Nutzsignal eines MID proportional zu dieser Flussdichte ist, wirken sich die erfindungsgemäß ohnehin geringen Rauschamplituden besonders stark in Richtung eines hohen Nutzsignal-Rauschsignal-Verhältnisses aus. Es ist daher vorteilhaft, magnetische Flussdichten von wenigstens 0,1 T im Messrohr zu realisieren. Besonders vorteilhaft werden dazu Permanentmagnete verwendet, da die erfindungsgemäße Vorrichtung für ihren Betrieb nicht auf die Nutzung von Wechselfeldern angewiesen ist.

Zusammenfassend erlaubt die erfindungsgemäße Vorrichtung erstmals die kontinuierliche magnetisch-induktive Messung von Fließvorgängen bei zugleich höchster Auflösung, d. h. bei einer besonders guten Unterdrückung von Rausch- und Driftsignalen. Darüber hinaus zeichnet sich die Messvorrichtung gemäß der Erfindung durch einen einfachen und kostengünstigen Aufbau aus.

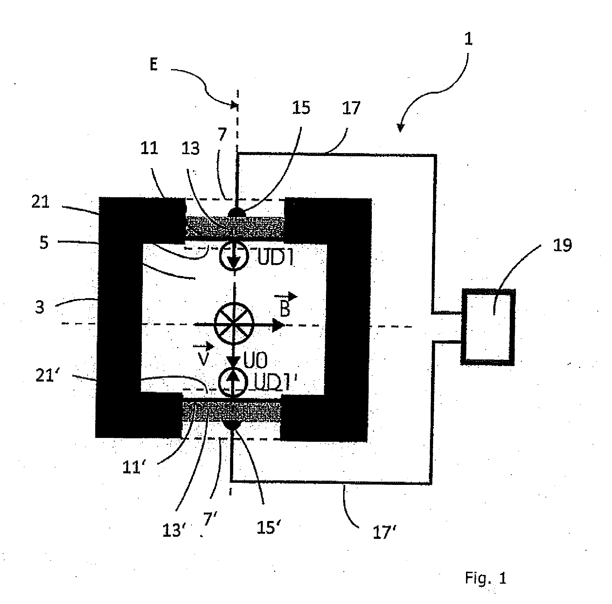

Die Erfindung wird im Folgenden anhand der einzigen Zeichnung näher erläutert.

Die einzige Figur zeigt einen schematischen Querschnitt durch eine Messvorrichtung 1 gemäß der Erfindung. Die Messvorrichtung 1 weist ein Messrohr 3 auf, welches von einem Medium 5 in einer Fließrichtung v durchströmt wird, die hier beispielhaft senkrecht in die Bildebene hinein zeigt.

Das in die Bildebene hineinströmende Medium 5 wird senkrecht von einem in der Figur beispielhaft von links nach rechts zeigenden Magnetfeld B durchsetzt. Durch das Zusammenwirken des Magnetfelds B und des fließenden Mediums 5 wird eine zum Volumenstrom proportionale Spannung U₀ als sogenanntes Nutzsignal in dem Medium 5 induziert. Die Messvorrichtung 1 weist hierzu Mittel zur Erzeugung eines orthogonal zur Flussrichtung des Mediums 5 liegenden gleichbleibenden magnetischen Feldes B auf. Die Mittel zur Erzeugung eines magnetischen Feldes B sind vorzugsweise Permanentmagneten, die in der Figur nicht dargestellt sind. Durch die Verwendung von Permanentmagneten wird das Medium von einem kontinuierlichen Magnetfeld durchsetzt, welches also kein Wechselfeld ist und daher eine kontinuierliche Messung der Fließgeschwindigkeit des Mediums 5 erlaubt.

Außerdem weist die Messvorrichtung 1 zwei Auskopplungsbereiche 7 und 7' auf, die in einer orthogonal zu der Fließrichtung des Mediums 5 liegenden Ebene E an der Wandung 9 des Messrohrs 3 angeordnet sind. Jeder Auskopplungsbereich 7 und 7' ist vorzugsweise in die Wandung 9 des Messrohrs 3 integriert und umfasst eine nichtmetallische poröse Schicht 11 bzw. 11' und eine Trägerschicht in Form einer Elektrode 13 bzw. 13', wobei die nichtmetallische poröse Schicht 11 bzw. 11' die dem Medium 5 zugewandte Seite der Elektroden 13, 13' vorzugsweise vollständig bedeckt. Die Elektroden 13 und 13' sind leitfähig und dienen der mechanischen Abstützung der Struktur und der Signalableitung nach außen. Die nichtmetallische Schicht 11, 11' kann ein Metalloxid, ein Metallnitrid oder ein Metallcarbid aufweisen bzw. aus diesen Materialien bestehen. "Nichtmetallisch" bedeutet in diesem Zusammenhang, dass die poröse Schicht im Gegensatz zu den Elektroden 13, 13' kein reines Metall aufweist, sondern vielmehr aus einem Material besteht, welches keine metallischen Eigenschaften, insbesondere keine gute Leitfähigkeit besitzt, sondern vielmehr elektrisch isolierend wirkt. Vorzugsweise weist die poröse Schicht 11 bzw. 11' durch eine aufeinander abgestimmte Wahl ihres spezifischen elektrischen Widerstands und ihrer Elektrizitätskonstante Tiefpasseigenschaften auf.

Vorzugsweise handelt es sich bei der Schicht 11 bzw. 11' um eine nichtmetallische poröse Schicht, die eine Porenstruktur oder eine fraktale Struktur aufweist und die mechanisch hart ausgebildet ist. Auf der der Schicht 11 bzw. 11' abgewandten Seite der Elektroden 13, 13', also auf der dem Medium 5 abgewandten Seite ist jeweils ein Anschluss 15 bzw. 15' an der Elektrode 13, 13' angebracht, der zur Auskopplung der erfassten Spannung U₀ dient. Die auf diese Weise ausgekoppelte Spannung wird jeweils über eine Verbindung 17 bzw. 17' einer Messeinrichtung 19 zugeführt, wobei die Messeinrichtung 19 insbesondere ein Messverstärker bzw. ein Differenzverstärker ist oder einen solchen umfasst.

Zwischen der Schicht 11, 11' und dem Medium 5 bildet sich jeweils eine einleitend beschriebe Grenzschicht 21, 21' aus, innerhalb derer sich das Ionengleichgewicht zwischen dem Medium 5 und der Schicht 11, 11' durch eine entsprechende Wechselwirkung einstellt. In den Grenzschichten 21, 21' jedes Auskopplungsbereiches 7 und 7' bilden sich weiterhin Doppelschichtspannungen UD₁ und UD₁' aus. Das Nutzsignal U₀ wird gemeinsam mit den als Störsignal wirkenden Doppelschichtspannungen UD₁ und UD₁' über die zwei symmetrisch angeordneten Auskopplungsbereiche 9 und 9' ausgekoppelt und über die Anschlüsse 6 und 6' und weiter über die Verbindungen 7 und 7' dem hochohmigen Messverstärker bzw. der Messeinrichtung 19 zugeführt.

Denkbar ist es auch, die poröse Schicht 11 bzw. 11' in die Wandung 9 des Messrohrs 3 zu integrieren. Die Auskopplungsbereiche 7 und 7', welche die Elektrode 13 bzw. 13' und die poröse Schicht 11 bzw. 11' aufweisen, können jedoch auch als kompakte Bauelemente ausgeführt sein und in entsprechende Öffnungen in die Wandung 9 eines Messrohres 3 eines magnetisch-induktiven Durchflusssensors bzw. einer Messvorrichtung 1 einfach eingesetzt werden.

Die Figur macht noch deutlich, dass die porösen Schichten 11 und 11' symmetrisch in Bezug auf das Messrohr 3 angeordnet sind. Auf diese Weise wird das Messsignal über die zwei symmetrisch angeordneten porösen Schichten 11 und 11' derart ausgekoppelt, dass sich Störsignale, insbesondere die Doppelschichtspannungen UD₁ und UD₁' beider "Symmetriehälften", also beider Auskopplungsbereiche 7 und 7' als Differenz weitgehend kompensieren, während sich das Nutzsignal U₀ als Summe der Signale jeweils halber Amplitude der beiden "Symmetriehälften" als Signal voller Höhe ergibt.

Gemäß der Erfindung weist die Messeinrichtung 19 einen Eingangswiderstand von wenigstens 100 GΩ, vorzugsweise von 120 GΩ auf. Dadurch lassen sich weitgehend rausch- und driftfreie Signale gewinnen, die erstmals die Realisierung einer kontinuierlichen Messung der Fließgeschwindigkeit mit einer permanentmagnetisch betriebenen Messvorrichtung 1 erlauben.

Zusammenfassend lässt sich feststellen, dass die vorliegende Erfindung die Vorteile einer fast stromlosen Feldmessung mit den Vorteilen der Signalauskopplung über nichtmetallische Schichten verbindet und die dadurch geschaffene Messvorrichtung darüber hinaus mit einem Permanentmagneten betrieben werden kann, sodass ein erheblicher Energieaufwand eingespart werden kann.

### Bezugszeichenliste

- 1: Messvorrichtung
- 3: Messrohr
- 5: Medium
- 7, 7': Auskopplungsbereich
- 9: Wandung
- 11, 11': poröse Schicht
- 13, 13': Elektrode
- 15, 15': Anschluss
- 17, 17': Verbindung
- 19: Messeinrichtung
- 21: Grenzschicht
- B: Magnetfeld
- E: Ebene
- V: Fließrichtung

## Patentansprüche

1. Messvorrichtung (1) zur Messung der Fließgeschwindigkeit eines ein Messrohr (3) durchfließenden Mediums (5), aufweisend
- Mittel zur Erzeugung eines orthogonal zu der Fließrichtung (v) des Mediums (5) liegenden gleichbleibenden magnetischen Feldes (B);
- wenigstens zwei Auskopplungsbereiche (7, 7'), die in einer orthogonal zu der Fließrichtung (v) des Mediums (5) liegenden Ebene (E) an der Wandung (9) des Messrohrs (3) angeordnet sind, wobei ein Auskopplungsbereich (7, 7') jeweils eine Elektrode (13, 13') aufweist, die auf der dem Medium zugewandten Seite eine nichtmetallische poröse Schicht (11, 11') aufweist; und
- eine Messeinrichtung (19) zur Erfassung eines Messsignals,
**dadurch gekennzeichnet, dass**
die poröse Schicht (11, 11') einen oxidischen und/oder einen nichtoxidischen keramischen Werkstoff aufweist.

2. Messvorrichtung (1) nach Anspruch 1,
**dadurch gekennzeichnet, dass** die Messeinrichtung (19) einen Eingangswiderstand von wenigstens 100 GOhm aufweist.

3. Messvorrichtung (1) nach Anspruch 1 oder 2,
**dadurch gekennzeichnet, dass**
die Mittel zur Erzeugung eines magnetischen Feldes (B) eine Flussdichte von mindestens 0,1 Tesla in dem Messrohr (5) erzeugen.

4. Messvorrichtung nach Anspruch 1 oder 2,
**dadurch gekennzeichnet, dass**
die Mittel zur Erzeugung eines magnetischen Feldes (B) einen Permanentmagnet umfassen, der insbesondere Materialien der Gruppe der Seltenen Erden, vorzugsweise SmCo und NdFe aufweist.

5. Messvorrichtung nach einem der vorhergehenden Ansprüche,
**dadurch gekennzeichnet, dass**
die poröse Schicht (11, 11') ein Metalloxid aufweist.

6. Messvorrichtung nach einem der Ansprüche 1 bis 4,
**dadurch gekennzeichnet, dass**
die poröse Schicht (11, 11') ein Metallnitrid aufweist.

7. Messvorrichtung nach einem der Ansprüche 1 bis 4,
**dadurch gekennzeichnet, dass**
die poröse Schicht (11, 11') Metallcarbid aufweist.

8. Messvorrichtung nach einem der Ansprüche 1 bis 4,
**dadurch gekennzeichnet, dass**
die poröse Schicht (11, 11') Kunststoff aufweist.

9. Messvorrichtung nach einem der vorhergehenden Ansprüche,
**dadurch gekennzeichnet, dass**
die poröse Schicht (11, 11') eine Porenstruktur oder eine fraktale Struktur aufweist.

10. Messvorrichtung nach einem der vorhergehenden Ansprüche,
**dadurch gekennzeichnet, dass**
die Dicke der porösen Schicht (11, 11') im Wesentlichen der Wanddicke des Messrohrs (3) entspricht.

11. Messvorrichtung nach einem der vorhergehenden Ansprüche,
**dadurch gekennzeichnet, dass**
die poröse Schicht (11, 11') in situ auf die Elektrode (13, 13') aufgebracht wird.

12. Messvorrichtung nach einem der vorhergehenden Ansprüche,
**dadurch gekennzeichnet, dass**
der Auskopplungsbereich (7, 7') als Bauelement in die Messvorrichtung (1) eingebaut werden kann.

13. Messvorrichtung nach einem der vorhergehenden Ansprüche,
**dadurch gekennzeichnet, dass**
die poröse Schicht (11, 11') in die Wandung (9) des Messrohrs (3) integriert ist.

14. Messvorrichtung nach einem der vorhergehenden Ansprüche,
**dadurch gekennzeichnet, dass**
das Messsignal über zwei symmetrisch angeordnete poröse Schichten (11, 11') derart ausgekoppelt wird, dass sich Störsignale beider Auskopplungsbereiche (7, 7') als Differenz weitgehend kompensieren, während sich das Nutzsignal (U₀) als Summe der Signale jeweils halber Amplitude der beiden Auskopplungsbereiche (7, 7') als Signal voller Höhe ergibt.

15. Messvorrichtung nach einem der vorhergehenden Ansprüche,
**dadurch gekennzeichnet, dass**
die poröse Schicht (11, 11') durch aufeinander abgestimmte Wahl ihres spezifischen elektrischen Widerstands und ihrer Elektrizitätskonstante Tiefpasseigenschaften aufweist.

16. Verfahren zur Messung der Fließgeschwindigkeit eines ein Messrohr (3) durchfließenden Mediums (5), das von einem orthogonal zur der Fließrichtung liegenden, gleichbleibenden magnetischen Feld (B) durchdrungen wird, wobei die sich in dem Medium (5) aufbauende elektrische Spannung (U₀) über in einer orthogonal zu der Fließrichtung (v) des Mediums (5) liegenden Ebene (E) an der Wandung (9) des Messrohrs (3) angeordnete, zu dem Medium (5) mittels einer nichtmetallischen porösen Schicht (11, 11') bedeckten Elektrode (13, 13') erfasst wird,
**dadurch gekennzeichnet, dass**
das Messsignal einer Messeinrichtung (19) zugeführt wird, die einen Eingangswiderstand von wenigstens 100 GOhm aufweist.
